Europäisches Patentamt

European Patent Office

Office européen des brevets

(11) Veröffentlichungsnummer: **0 146 934**

A1

## (12) EUROPÄISCHE PATENTANMELDUNG

(21) Anmeldenummer: 84115946.0

(22) Anmeldetag: 20.12.84

(51) Int. Cl.⁴: **G 02 C 5/12**

(30) Priorität: 20.12.83 DE 3345992

(43) Veröffentlichungstag der Anmeldung:
03.07.85 Patentblatt 85/27

(84) Benannte Vertragsstaaten:
IT

(71) Anmelder: Optische Werke G. Rodenstock
Isartalstrasse 43
D-8000 München 5(DE)

(72) Erfinder: Pellert, Heinz, Dipl.-Ing. (FH)
Hornstrasse 15
D-8000 München 40(DE)

(74) Vertreter: Schiller, Walter, Dr.
Kanzlei Münich & Schiller Willibaldstrasse 36
D-8000 München 21(DE)

(54) Weicher Brillen-Sattelsteg.

(57) Beschrieben wird ein weicher, zur Auflage auf dem Nasenwurzelbereich bestimmter Brillensattelsteg, der über eine Querbrücke verbundene Seitenflügel und Nuten zum Aufrasten auf die Brillenfassung aufweist. Der Sattelsteg hat einen aus einem harten elastischen Material bestehenden Kern, in dem die Nuten ausgebildet sind, und der mit Ausnahme der die Nuten bildenden Flächen mit einem weichen MAterial ummantelt ist.

Bei einer bevorzugten Ausführungsform hat das weiche Ummantelungsmaterial eine Härte von ca 35 bis 50 Shore-A.

EP 0 146 934 A1

- 1 -

---

Weicher Brillen-Sattelsteg

---

# B e s c h r e i b u n g

Die Erfindung bezieht sich auf einen weichen Brillen-Sattelsteg gemäß dem Oberbegriff des Patentanspruchs 1.

Derartige Brillen-Sattelstege sind seit langem, beispielsweise aus der US-PS 27 74 279, der US-PS 35 84 939 oder der DE-OS 25 45 683 bekannt. In diesen Druckschriften sind weitgehend gleiche Brillen-Sattelstege beschrieben, die homogen aus einem weichen Material, beispielsweise Silikonkautschuk oder einem Material auf Naturkautschukbasis bestehen.

Da das verwendete homogene Material sehr weich ist und damit nur eine geringe Stabilität aufweist, ist bei diesen bekannten Brillen-Sattelstegen die Befestigung an der Brillenfassung problematisch.

Andererseits ist in der US-PS 1 184 792 vorgeschlagen worden, ein Material auf einer dünnen, federnden Metallfolie aufzubringen. Die dünne Metallfolie legt sich an die Brillenfassung an, so daß ein einigermaßen sicherer Halt gewährleistet ist. Das auf der Metallfolie aufgebrachte Material ist jedoch kein weiches Material im Sinne des Oberbegriffs des Patentanspruchs 1, sondern ein Material, das insbesondere unter dem Gesichtspunkt ausgewählt ist, daß bei Kälte auf dem Nasenrücken keine partiellen Erfrierungen an den Stellen auftreten sollen, an denen eine Metallbrille aufliegt.

Bei einem weiteren in der DE-OS 32 12 686 gemachten Vorschlag wird in einem weichen Brillen-Sattelsteg aus Silikonkautschuk eine metallene Feder eingebettet, die die beiden Seitenflügel zu einer Anlage an der Brillenfassung vorspannt. Zusätzlich ist der Sattelsteg an der Querbrücke mit einer Schraube angeschraubt.

Das Einbetten einer metallenen Feder mit den erforderlichen geringen Toleranzen in dem Silikonkautschuk ist jedoch fertigungstechnisch aufwendig, so daß dieser Brillen-Sattelsteg teuer in der Herstellung ist. Darüberhinaus erlaubt auch bei dieser Konstruktion das weiche Material, in dem die Nut ausgebildet ist, keine zuverlässige formschlüssige Verbindung. Insbesondere bei feinstrukturierten Metallfassungen ist dabei ein Abgleiten des Sattelstegs von den Gläserringen möglich.

Der Erfindung liegt die Aufgabe zugrunde, einen weichen Brillen-Sattelsteg gemäß dem Oberbegriff des Patentanspruchs 1 derart weiterzubilden, daß bei einfachem Aufbau und damit geringen Herstellkosten eine zuverlässige Verbindung mit der Brillenfassung gewährleistet ist.

0146934
R 45/83 EUP

Diese Aufgabe wird erfindungsgemäß durch die im kennzeichnenden Teil des Patentanspruchs 1 angegebenen Merkmale gelöst.

Erfindungsgemäß weist der weiche Sattelsteg einen harten elastischen Kern auf, in dem die Nut zum Aufrasten auf die Brillenfassung ausgebildet ist. Da die Nut nicht mit weichem Material bedeckt ist, ist jederzeit ein festes Aufrasten und damit ein guter Sitz an der Brillenfassung gewährleistet. Darüberhinaus hat es sich überraschenderweise herausgestellt, daß der weiche Brillen-Sattelsteg der aus einem harten elastischen Kern mit einer Weichstoff-Auflage besteht, angenehmere Trageeigenschaften hat als ein homogen aus einem weichen Material bestehender Brillen-Sattelsteg. Dies ist auf die optimale Druckverteilung zurückzuführen, die sich aufgrund des harten elastischen Kerns ergibt.

Weitere Merkmale der Erfindung sind in den Unteransprüchen gekennzeichnet:

Der Kern kann beispielsweise aus einem federelastischen Metall bestehen. Gemäß Anspruch 2 kann der Kern auch aus einem Kunststoff bestehen. Dabei können unter anderem die in der DE-OS 27 50 910 für weiche Seitenstegplättchen angegebenen Kernmaterialien verwendet werden. Ausdrücklich wird jedoch darauf hingewiesen, daß die dortige Aufzählung nicht abschließend ist.

Bei der Weiterbildung gemäß Anspruch 3 ist die Form des Kerns der Form der Seitenflügel und der Querbrücke angepaßt. Hierdurch ist der weiche Sattelsteg auch im Bereich der die Seitenflügel verbindenden Querbrücke in seiner Lage sehr gut fixiert.

Eine gleichmäßige Druckverteilung und damit eine große wirksame Auflagefläche auf der Nase, durch die die Hautreizung äußerst klein gehalten werden kann, kann durch eine spezielle Gestaltung des Kerns erreicht werden, bei der die Dicke und damit die Stabilität des Kerns so bemessen ist, daß eine gute Anpassung an die Nasenform gewährleistet ist. Besonders vorteilhaft ist es dabei, wenn der Kern gemäß Anspruch 4 im unteren Bereich der Seitenflügel jeweils mindestens einen Durchbruch aufweist. Dieser Durchbruch setzt - insbesondere dann, wenn die Fläche des unteren Bereichs im Vergleich zu der des oberen Bereichs vergrößert ist - die Stabilität des Kerns herab, so daß eine gute Anpassung an die Nasenform und damit eine gleichmäßige Druckverteilung gewährleistet ist.

Die Durchbrüche im Bereich der Seitenflügel erlauben darüberhinaus eine sehr gute Verankerung des weichen Materials, das die Ummantelung bildet, am Kern.

Die erfindungsgemäße Verwendung eines harten Kerns erlaubt es darüberhinaus gemäß Anspruch 5, den Sattelsteg ohne Vorspannung auf die Brillenfassung aufzurasten.

Die Erfindung wird nachstehend anhand eines Ausführungsbeispiels unter Bezugnahme auf die Zeichnung näher beschrieben, in der zeigen:

Fig. 1 eine Vorderansicht eines erfindungsgemäßen weichen Brillen-Sattelstegs,

Fig. 2 einen Querschnitt durch einen Seitenflügel dieses Sattelstegs und

Fig. 3 eine Seitenansicht des Seitenflügels.

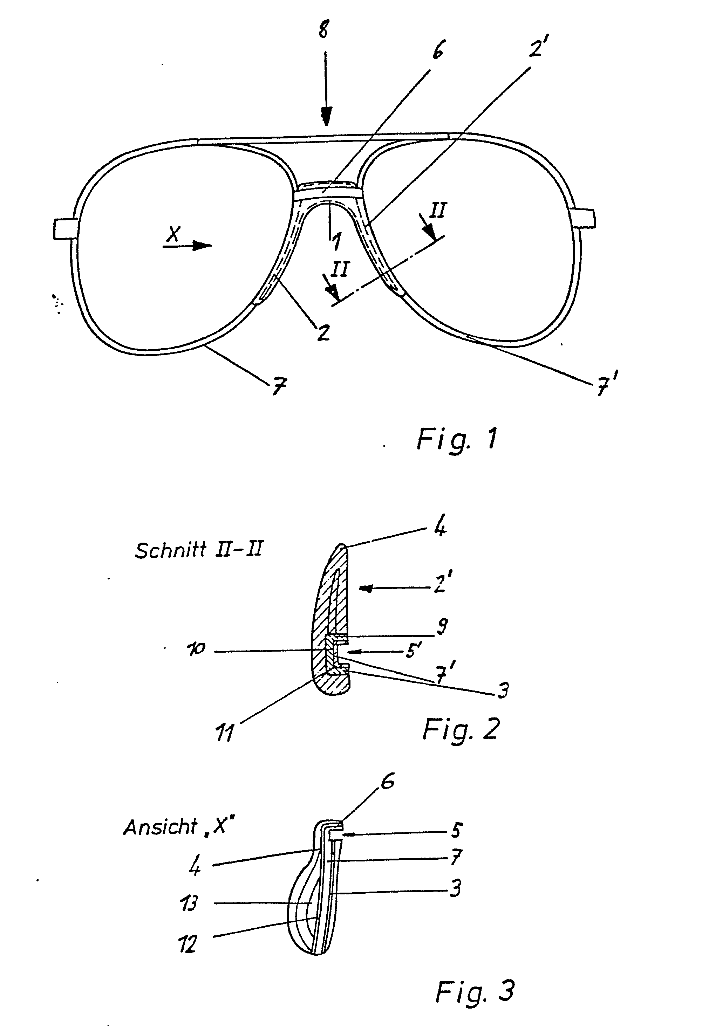

Fig. 1 zeigt ein Ausführungsbeispiel eines Brillen-Sattelstegs, der in an sich üblicher Weise aus einer Querbrücke 1 und zwei Seitenflügeln 2 bzw. 2' besteht, mit denen der Sattelsteg auf dem Nasenwurzelbereich eines Brillenträgers aufliegt.

Wie insbesondere die Fig. 2 und 3 zeigen, weist der weiche Brillen-Sattelsteg einen harten Kern 3 und eine Ummantelung 4 aus einem weichen Material auf.

Bei dem gezeigten Ausführungsbeispiel ist der Kern 3 einstückig ausgebildet und in seiner Form der Form der Querbrücke 1 und der Seitenflügel 2 und 2' angepaßt. In dem harten Kern 1 befinden sich Nuten 5 und 5' mit denen der weiche Brillen-Sattelsteg auf eine Fassungsbrücke 6 und Gläserringe 7 bzw. 7' einer in Fig. 1 gezeigten Brillenfassung 8 aufrastbar ist.

Die Ummantelung 4 aus einem weichen Material des Kerns 1 ist mindestens auf den Flächen des Kerns aufgebracht, mit denen der Sattelsteg auf der Nase des Brillenträgers aufliegt. In jedem Falle sind jedoch die Begrenzungsflächen 9, 10 und 11 der Nuten 5 bzw. 5' im wesentlichen frei von der Schicht aus einem weichen Material.

Fig. 3 zeigt eine Seitenansicht des Seitenflügels 2. Die Breite des Seitenflügels 2 ist im unteren Bereich des Seitenflügels größer als im oberen Bereich, um in diesem für Druckstellen etc. kritischen Bereich der Nasenwurzel eine größere Auflagefläche zu erzielen. Das Seitenflügel-Teil 12 des Kerns 3 ist in seinem Abmessungen dem Außenumriß des Seitenflügels 2 angepaßt. Um die Stabilität des Kerns 1 heabzusetzen, so daß sich der Seitenflügel 2 besser der Nasenform anpassen kann, ist im unteren Bereich des Seitenflügel-Teils 2 ein Durchbruch 13 in Form eines Auges vorgesehen. Das Auge 13 wird von dem weichen Material 4 durchsetzt, so daß das Auge 13 die Verankerung der Ummantelung 4 an dem Kern verbessert.

Der vorstehend beschriebene Sattelsteg kann beispielsweise einen Kern aus Zelluloseacetat oder Zellulosepropionat und eine Weichstoff-Ummantelung aus Silikonkautschuk aufweisen. Das Material der Weichstoff-Ummantelung hat bevorzugterweise eine Shore-A-Härte nach DIN 53 505 von 35 bis 50, während die Shore-A-Härte des Kerns ca. 100 beträgt. Die Dicke der Weichstoff-Ummantelung kann einige mm betragen, sie kann jedoch aufgrund der erfindungsgemäßen Maßnahmen bis auf ca. 0,1 mm herabgesetzt werden, ohne daß die weiche Charakteristik des Sattelstegs verlorengeht und beim Brillenträger Druckstellen entstehen, wie sie bei den bekannten harten Sattelstegen vorkommen. Der Außenumriß des Kerns kann dabei ca. 2 mm hinter dem Außenumriß des Seitenflügels liegen.

Im Rahmen des vorstehend exemplarisch beschriebenen allgemeinen Erfindungsgedankens sind natürlich die verschiedensten Modifikationen möglich.

Beispielsweise ist es möglich, auf die Nut 5 im Bereich der Querbrücke des Kerns zu verzichten und gegebenenfalls eine Befestigung mit einem mechanischen Befestigungselement, wie einer Schraube, vorzusehen. Ferner kann der Sattelsteg auch zusätzlich zum Aufrasten auf die Fassungsbrücke in diesem Bereich an der Fassung verschraubt werden.

Ferner können für den Kern und die Weichstoff-Ummantelung die verschiedensten Materialien anstelle der vorstehend angegebenen verwendet werden. Eine nicht-abschließende Aufzählung derartiger Materialien ist beispielsweise in der DE-OS 27 50 910 angegeben. Darüberhinaus können die Querschnittsabmessungen des Kerns örtlich unterschiedlich der Notwendigkeit einer optimalen Druckverteilung angepaßt werden, so daß die Stabilität des Kerns zwar eine zu starke Durchwölbung verhindert, eine optimale Anpassung an die Nasenform aber ermöglicht.

Auch können anstelle des einen Durchbruchs im unteren Teil des Kerns im Seitenflügel-Bereich mehrere vorgesehen werden, um die Stabilität und damit die Durchwölbung des erfindungsgemäßen Sattelstegs entsprechend einzustellen. Darüberhinaus können auch an anderen Stellen des Kerns Durchbrüche vorgesehen werden.

**P a t e n t a n s p r ü c h e**

1. Weicher zur Auflage auf dem Nasenwurzelbereich bestimmter Brillen-Sattelsteg mit Seitenflügeln, diedurch eine Querbrücke verbunden sind, und mit Nuten, zum Aufrasten auf die Gläserringe und gegebenenfalls auf die Fassungsbrücke, dadurch **gekennzeichnet,** daß der Sattelsteg einen aus einem harten elastischen Material bestehenden Kern (3) aufweist, in dem die Nuten (5, 5') ausgebildet sind, und der mit Ausnahme der die Nuten (5, 5') bildenden Flächen (9, 10, 11) mit weichem Material (4) ummantelt ist.

2. Sattelsteg nach Anspruch 1, dadurch **gekennzeichnet,** daß der Kern (3) aus einem Kunststoff besteht, der eine hohe Elastizität und eine Shore-A-Härte von mehr als 90 hat.

3. Sattelsteg nach Anspruch 1 oder 2, dadurch **gekennzeichnet,** daß der Umriß des Kerns (3) etwa parallel zur Außenkontur des Sattelstegs verläuft.

4. Sattelsteg nach Anspruch 3, dadurch **gekennzeichnet,** daß der Kern (3) im unteren Auflagebereich der Seitenflügel (2, 2') jeweils mindestens einen Durchbruch (13) aufweist.

5. Sattelsteg nach Anspruch 4, dadurch **gekennzeichnet,** daß das weiche Ummantelungs-Material (3) eine Härte von ca. 35 bis 50 Shore-A hat.

6. Sattelsteg nach einem der Ansprüche 1 bis 5, dadurch **gekennzeichnet,** daß das Spreizmaß des Sattelstegs dem Verlauf der Gläserringe (7, 7') der Fassung angepaßt ist.

0146934

Fig. 1

Schnitt II–II

Fig. 2

Ansicht „X"

Fig. 3

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 203 987 (A. BIANCHI) <br> * Insgesamt * | 1 | G 02 C 5/12 |
| A | | 3,6 | |
| | --- | | |
| D,Y | DE-A-2 750 910 (NITSCHE & GÜNTHER) <br> * Insgesamt * | 1,2 | |
| A | | 5 | |
| | --- | | |
| A | DE-A-2 938 241 (A. NUTZ-KAMMERER) <br> * Insgesamt * | 1,2,5 | |
| | --- | | |
| A | DE-C- 349 121 (A. RODENSTOCK) <br> * Figuren 2,3 * | 4 | RECHERCHIERTE SACHGEBIETE (Int. Cl.4) <br><br> G 02 C |
| | ----- | | |

Der vorliegende Recherchenbericht wurde für alle Patentansprüche erstellt.

| Recherchenort <br> DEN HAAG | Abschlußdatum der Recherche <br> 27-03-1985 | Prüfer <br> SEIFERT H.U. |
|---|---|---|